# EUROPÄISCHE PATENTSCHRIFT

(11) **EP 1 340 824 B1**
(45) Veröffentlichungstag und Bekanntmachung des Hinweises auf die Patenterteilung: **06.08.2014**
(21) Anmeldenummer: 03002868.2
(22) Anmeldetag: 08.02.2003
(51) Int. Cl.: C21D 1/18, C21D 9/32, C21D 1/20, F16C 33/64, C21D 9/40

(54) **Verfahren zum Herstellen eines Bauteils aus Metall**
Method for manufacturing a metal component
Procédé pour la fabrication d'un composant en metal

(30) Priorität: 01.03.2002 DE 10209264
(43) Veröffentlichungstag der Anmeldung: 03.09.2003
(73) Patentinhaber: AB SKF, 415 50 Göteborg (SE)
(72) Erfinder: Gegner, Jürgen, Dr., 90765 Fürth (DE)
(74) Vertreter: Gosdin, Michael

(56) Entgegenhaltungen:
- EP-A- 0 718 410
- EP-A- 0 943 694
- DE-A- 3 910 959
- DE-A- 10 003 720

## Beschreibung

Die Erfindung betrifft ein Verfahren zum Herstellen eines Bauteils aus Metall.

Ein solches Verfahren ist in der DE 39 10 959 C2 beschrieben. Dort ist vorgesehen, dass das metallische Bauteil zunächst einer Wärmebehandlung zur Härtung des Teils unterzogen wird. Die Wärmebehandlung endet mit einem Anlassvorgang, bei dem das Bauteil für eine vorgegebene Zeit auf Anlasstemperatur gehalten wird. Im Anschluss an die Wärmebehandlung schließt sich eine Feinbearbeitung an (Schleifen und Honen). Das Anlassen erfolgt bis zu Zeiten von 1 bis 2 Stunden; damit wird erreicht, dass das gesamte Bauteil erwärmt wird.

Ein ähnliches Verfahren ist aus der DE 100 03 720 A1 bekannt. Auch hier wird ein Wärmebehandlungsverfahren offenbart, das in üblicher Weise mit einem Anlassvorgang abschließt. Anschließend erfolgt eine spanende Bearbeitung.

Die bei zyklischer Beanspruchung (z. B. durch Überrollung durch Wälzkörper) im Betrieb einsetzende Versetzungsbeweglichkeit trägt als Mechanismus der Materialermüdung wesentlich zur Werkstoffentfestigung und damit zum Ausfall der Bauteile bei. Dies ist besonders bei Anwendungen in Wälzlagern zu beobachten. Durch die vorbekannten Fertigungsverfahren erfolgt keine Stabilisierung der vorliegenden Versetzungsstruktur. Damit wird auch keine Stabilisierung des bei einer geeignet durchgeführten Oberflächenbearbeitung eingebrachten Druckeigenspannungszustands erreicht.

Der Erfindung liegt daher die **Aufgabe** zugrunde, eine Steigerung der Lebensdauer des Bauteils durch eine Stabilisierung des Versetzungszustands zu erreichen.

Die **Lösung** dieser Aufgabe durch die Erfindung ist durch die Abfolge folgender Verfahrensschritte gekennzeichnet:
a) Durchführung einer Wärmebehandlung zur Härtung des Bauteils, die mit einem Erwärmungsvorgang, insbesondere mit einem Anlass- oder Gefügeumwandlungsvorgang, bei vorgegebener Temperatur endet;
b) Durchführung mindestens einer spanenden Bearbeitung des Bauteils bei Raumtemperatur, um es auf seine gewünschte geometrische Form zu bringen;
c) anschließendes Erwärmen des Bauteils auf eine Temperatur, die größer ist als die Raumtemperatur, wobei dieses Erwärmen den Abschluss der Herstellung des Bauteils darstellt.

Gemäß einer ersten Weiterbildung ist vorgesehen, dass das Bauteil bei der Durchführung des obigen Schritts c) in einem Ofen oder mittels Infrarot-Strahlung, jeweils unter Luft- oder Schutzgasatmosphäre, erwärmt oder in einem Salzbad gehalten wird. Das Bauteil kann bei der Durchführung des Schritts c) auch an Luft oder in einer Schutzgasatmosphäre induktiv erwärmt werden.

Die Temperatur bei der Durchführung des obigen Schritts c) kann zwischen 50 °C und 400 °C liegen.

Die Wärmebehandlung gemäß obigem Schritt a) kann eine martensitische Durchhärtung, eine Einsatzhärtung oder eine Induktionshärtung eines Stahls mit abschließendem Kurzzeit- oder konventionellen Anlassvorgang sein. Die Wärmebehandlung nach obigem Schritt a) kann auch eine bainitische Härtung eines Stahls oder eine Härtung eines Stahls in ein bainitisch-martensitisches bzw. martensitisch-bainitisches Mischgefüge sein. In jedem der eben genannten Fälle ist bevorzugt vorgesehen, dass die Temperatur des Erwärmungsvorgangs gemäß obigem Schritt c) zwischen 100 °C und 350 °C liegt.

Weiterbildungsgemäß ist vorgesehen, dass das Bauteil bei der Durchführung des obigen Schritts c) für eine Zeit von mindestens 2 Sekunden, vorzugsweise von mindestens 1 Minute, auf der Temperatur gehalten wird.

Weiterhin kann vorgesehen sein, dass der Werkstoff des Bauteils eine metallische Legierung mit interstitiell gelösten Atomen, insbesondere ein kohlenstoff- und stickstofflegierter Stahl, ist.

Der gemäß dem vorgeschlagenen Verfahren hergestellte Werkstoff kommt bevorzugt für Komponenten eines Wälz- oder Gleitlagers in Frage, es handelt sich bevorzugt um Wälzlagerstahl oder Einsatzstahl.

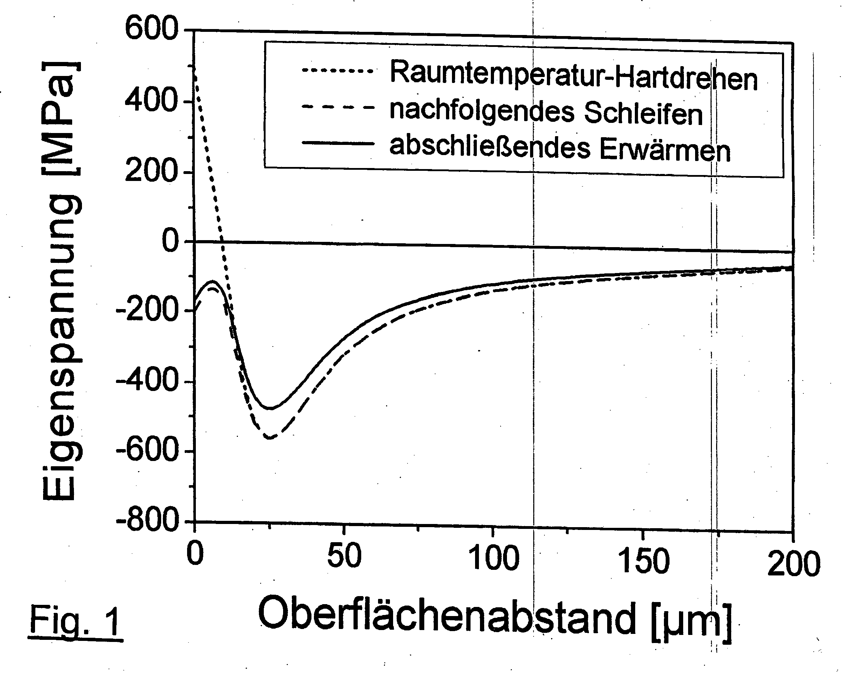

In vorteilhafter Weise stabilisiert die Erwärmung des Bauteils im Anschluss an die spanende Oberflächenbearbeitung (siehe Schritt b) bei metallischen Werkstoffen mit gelösten Zwischengitteratomen die in der Randschicht erzeugte Versetzungsstruktur im Vergleich mit den entsprechenden reinen Raumtemperaturbehandlungen. Speziell wird in Stählen der interstitiell gelöste Kohlenstoff im Gitter beweglich und kann unter Bildung sogenannter Cottrell-Wolken an die Versetzungskeme diffundieren (Diffüsionslängen typischerweise im Bereich weniger 10 Nanometer) und dort segregieren (vergleiche Portevin-Le Chätelier-Effekt, Reckalterung). Diese Atomanordnung ist energetisch begünstigt, unterstützt so die Beständigkeit der durch die spanende Oberflächenbearbeitung in der plastisch verformten Randzone erzeugten Versetzungsstruktur und wirkt daher im Betrieb der einsetzenden Versetzungsbewegung entgegen. Durch Erhöhung der Ermüdungsbeständigkeit (Dauerfestigkeit) des Werkstoffs wird dadurch die Lebensdauer gesteigert. Zusätzlich erfolgt eine Stabilisierung des durch die spanende Oberflächenbearbeitung bei Raumtemperatur in der Randschicht eingebrachten Druckeigenspannungszustands, wobei das Maximum je nach Temperatur und Dauer um bis zu etwa 10 % bis 20 % vermindert wird. Dabei ist die gegebenenfalls mehrstufige spanende Oberflächenbearbeitung bei Raumtemperatur so durchzuführen, dass sie nach ihrem vollständigen Abschluss keine Zugeigenspannungen erzeugt hat. Diese würden das Ermüdungsverhalten des Werkstoffs verschlechtern. Teilprozesse können allerdings zum Aufbau lokaler Zugeigenspannungen in der Randschicht führen, solange diese, speziell im unmittelbaren Oberflächenbereich, durch geeignete nachfolgende Arbeitsschritte in Druck überführt werden (siehe als Beispiel Figur 1 und die späteren Erläuterungen hierzu).

Wie bereits erwähnt, liegen geeignete Temperaturen für die sich an die spanende Oberflächenbearbeitung anschließende Stabilisierungsglühung je nach verwendetem Werkstoff und durchgeführter Wärmebehandlung im Bereich zwischen 50 °C und 400 °C. Dabei orientiert sich die jeweilige Dauer an den betreffenden thermisch aktivierten Prozessen und der Einhaltung der Bauteilspezifikationen (z. B. Härte, Maßstabilität). Geeignete Temperaturen der Stabilisierungsglühung gemäß vorgenanntem Schritt c) liegen für martensitisch durchgehärteten, einsatzgehärteten oder induktionsgehärteten Stahl, für bainitische oder martenitisch-bainitische bzw. bainitischmartensitische Komponenten jeweils zwischen 100 °C bis 350 °C. Die Behandlungszeit ist der Temperatur anzupassen und liegt typischerweise bei Verwendung eines Ofens, einer Infrarot-Strahlungs-Apparatur oder eines Salzbades im Bereich zwischen 1 Minute und 1 Stunde und bei induktiver Erwärmung zwischen 2 Sekunden und 3 Minuten. Mit abnehmender Temperatur nimmt die Zeit entsprechend zu.

Die Erfindung ist für metallische Bauteile (z. B. Wälz- und Gleitlagerkomponenten) aus Werkstoffen mit Reckalterung nach der Wärmebehandlung vorgesehen. Es schließt sich die spanende Oberflächenbearbeitung und die erfindungsgemäße Stabilisierungsglühung an. Danach kann auch noch eine Feinbearbeitung erfolgen, sofern deren Einflusszone in der Tiefe deutlich geringer ausgedehnt ist; beispielsweise kommt hierfür ein Honvorgang in Frage.

In den Zeichnungen sind Ausführungsbeispiele der Erfindung dargestellt. Beide Figuren zeigen Diagramme, wobei jeweils auf der Ordinate die Eigenspannung eines metallischen Bauteils und auf der Abszisse der Oberflächenabstand angegeben ist.

Die Erfindung dient der Herstellung eines metallischen Bauteils mit hoher Lebensdauer. Solche Bauteile werden beispielsweise als Wälzlagerkomponenten benötigt. Durch spanende Oberflächenbearbeitung, wie Hartdrehen, Fräsen, Schleifen, Honen und Gleitschleifen, bei Raumtemperatur wird zunächst im je nach Verfahren unterschiedlich ausgedehnten plastifizierenden Werkstoffbereich eine hohe Versetzungsdichte erzeugt. Bei geeigneter Prozessführung (z. B. Gegenlauffräsen, Hartdrehen mit geeigneter Schneidengeometrie) entstehen zusätzlich in der Randschicht risshemmende Druckeigenspannungen, deren Maximum einschließlich deren Lage unter der Oberfläche wiederum von der Methode und der Behandlungsdauer abhängt (z. B. Schleifen und Honen: Druckeigenspannungsmaximum um 400 bis 600 MPa an der Oberfläche mit steilem Gradienten, Gleitschleifen und Hochgeschwindigkeitsfräsen: Maximum ähnlicher Größe im Tiefenbereich weniger 10 Mikrometer mit danach flacherem Gradienten).

Liegen ein solcher Druckeigenspannungszustand in der Randschicht und eine geeignete Oberflächentopographie (z.B. Rₐ im Bereich um 0,1 µm für Wälzlagerlaufbahnen) vor, können die genannten Verfahren als letzter Bearbeitungsschritt des betreffenden Bauteils dienen. In diesem Fall wird durch die sich erfindungsgemäß anschließende Erwärmung des Bauteils bei Temperaturen zwischen 50 °C und 400 °C, bevorzugt zwischen 100 °C und 350 °C, dank der damit verbundenen Verminderung der Versetzungsbeweglichkeit in der Randschicht, ein ermüdungsbeständiges Gefüge stabilisiert. Dies führt gleichzeitig zu einer Stabilisierung des erzeugten Druckeigenspannungszustands, wobei das Verfahren vor allem für Anwendungen interessant ist, bei denen die damit ebenfalls verbundene leichte Abnahme des Druckeigenspannungsmaximums um bis zu etwa 10 % bis 20 % (abhängig von Temperatur und Dauer) für die Betriebseigenschaften nicht relevant ist (z.B. bei Wälzlagerkomponenten oder Zahnrädern). Da für den beschriebenen metallkundlichen Prozess thermisch aktivierte Vorgänge maßgeblich sind, richtet sich die Dauer der Stabilisierungsglühung gemäß des obigen Schritts c) nach der jeweiligen Temperatur. Die Temperatur des Anlass- bzw. Gefügeumwandlungsvorgangs im Rahmen der Wärmebehandlung (z. B. Martensit- oder Bainithärtung) gemäß des vorgenannten Schritts a) kann dabei überschritten, jedoch speziell bei Verwendung eines Ofens, einer Infrarot-Strahlungs-Apparatur oder Salzbades durchaus auch merklich unterschritten werden. Die geeignete Wahl von Temperatur und Dauer des gefügestabilisierenden Erwärmungsvorgangs nach vorgenanntem Schritt c) richtet sich ebenfalls nach der Einhaltung der Bauteilspezifikationen. Insbesondere sind eventuell auftretende geringe Maßänderungen und Härteabfall weitgehend zu vermeiden. Auch kann gegebenenfalls eine abschließende Feinbearbeitung erfolgen, sofern sie nur zu einer deutlich geringer ausgedehnten Einflusszone führt (z. B. Honen).

In Figur 1 ist der schematische Verlauf der Eigenspannung über den Oberflächenabstand für drei verschiedene Prozesszustände angegeben:

Nach einer konventionellen martensitischen oder bainitischen Durchhärtung eines Wälzlagerrings aus Wälzlagerstahl erfolgt die Hartbearbeitung bei Raumtemperatur mittels Hartdrehen nahezu auf Endmaß. Bei Verwendung geeigneter Schneidengeometrie ergibt sich für die unter der Laufbahnoberfläche entstehenden Eigenspannungen ein Verlauf, wie er in der Figur durch gepunktete Linie dargestellt ist.

Durch das sich anschließende Schleifen und Honen bzw. Gleitschleifen bei Raumtemperatur werden bei deutlich geringerer Tiefe der Einflusszone die randnahen Zugeigenspannungen in den Druckbereich umgewandelt, so dass sich insgesamt der in der Figur gestrichelt dargestellte, reine Druckeigenspannungsverlauf in der Randschicht ergibt. Dieser verbessert die Bauteillebensdauer bei zyklischer Belastung.

Im Anschluss hieran erfolgt der Erwärmungsvorgang nach Schritt c) gemäß Anspruch 1.

Man wählt hierfür typischerweise bei martensitischer Durchhärtung, Einsatzhärtung, Induktionshärtung oder Härtung in ein bainitisch-martensitisches bzw. martensitisch-bainitisches Mischgefüge bei Verwendung eines Ofens, einer Infrarot-Strahlungs-Apparatur oder eines Salzbades jeweils eine Temperatur zwischen 100 °C und 300 °C (z.B. je nach Dauer, Anlass- bzw. Gefügeumwandlungstemperatur, Kontrolle von Härte und Maßstabilität) über eine Behandlungsdauer von etwa 1 Minute bis 1 Stunde, bei induktiver Erwärmung eine Temperatur bis etwa 350 °C und Zeiten zwischen 2 Sekunden und ca. 3 Minuten. Eine vollständige Erwärmung des Bauteils bis zum Kern ist aber nicht erforderlich, da grundsätzlich nur die Randschicht (im Beispiel bis ca. 100 µm) betroffen ist. Insbesondere ist auf die Maßstabilität (speziell Restaustenitumwandlung) und die Härte zu achten. Wegen des sehr geringen Restaustenitgehalts sind bei bainitischer Härtung Maßhaltigkeits― probleme in der Regel nicht zu erwarten, was innerhalb der oben genannten Grenzen den Einsatz höherer Temperaturen erleichtert.

Anschließend kann die Laufbahnoberfläche noch gehont werden (sehr kleine Beeinflussungszone), speziell, falls dies zuvor nicht nach dem Schleifen geschah. Besonders bevorzugt erfolgt das Schleifen und Honen noch vor dem erfindungsgemäßen Erwärmen gemäß Schritt c) von Anspruch 1, der dann den abschließenden Prozess darstellt.

In allen Fällen aus Figur 1 (martensitische Durchhärtung, bainitische Härtung, Einsatzhärtung, induktive Randschichthärtung) kann, wenn nahe oder über der Anlasstemperatur (Kurzzeit- oder konventionelles Anlassen) bzw. Umwandlungstemperatur erwärmt wird, der vorangegangene Wärmebehandlungsschritt (Anlassen, Umwandeln) entsprechend verkürzt werden. Gleiches gilt für die Härtung in ein bainitisch-martensitisches bzw. martensitisch-bainitisches Mischgefüge.

Der geschilderte Erwärmungsvorgang gemäß Schritt c) von Anspruch 1 führt zu einer Stabilisierung des Gefüges. Der damit verbundene geringe Eigenspannungsabbau (siehe hierzu in der Figur die durchgezogene Kurve nach Abschluss der Behandlung) ist speziell für Wälzlageranwendung für die Betriebseigenschaften nicht relevant. Interstitiell gelöste Kohlenstoffatome diffundieren an die Versetzungskeme, segregieren dort (energetisch günstiger Zustand, vergleiche Reckalterung) und stabilisieren so die Versetzungsstruktur des Verformungsgefüges in der plastischen Einflusszone der vorangegangenen spanenden Bearbeitung. Durch die damit verbundene Versetzungsverankerung werden Vorgänge der Werkstoffermüdung, insbesondere Versetzungsdämpfüng und Bildung von Gleitversetzungen, behindert (höhere Spannung nötig), was die Lebensdauer des Bauteils erhöht. Die Wahl einer geeigneten Erwärmungszeit und -temperatur richtet sich nach der Kohlenstoffdiffüsion, die einen thermisch aktivierten Vorgang darstellt.

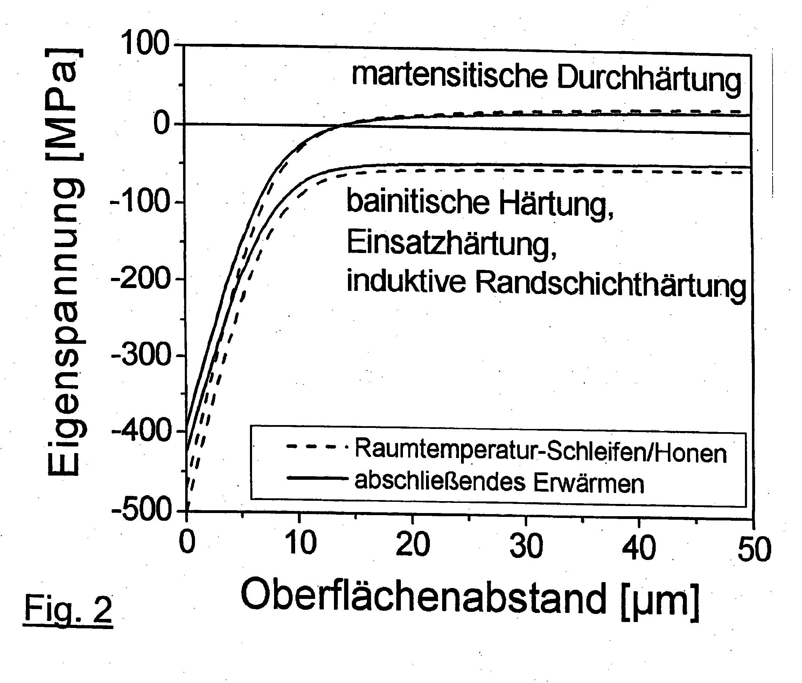

Eine weitere technisch relevante Variante liegt darin, dass sich die Wärmebehandlung nach Schritt c) gemäß Anspruch 1 an einen spanenden Bearbeitungsvorgang gemäß Schritt b) nach Anspruch 1 anschließt, der lediglich aus Schleifen und Honen ohne vorheriges Hartdrehen besteht. Dabei kann beispielsweise gemäß Schritt a) von Anspruch 1 martensitisch oder bainitisch gehärtetes Material bzw. Einsatzstahl verwendet werden. Die Eigenspannungszustände nach dem Schleifen und Honen bei Raumtemperatur (gestrichelte Linie) sowie der abschließenden Erwärmung (durchgezogene Linie) gibt Figur 2 schematisch wieder. Das Verfahren eignet sich insbesondere für Anwendungen bei Lagern, da diese in über 90 % der Fälle von der Oberfläche her ausfallen und gerade die Versetzungsstruktur im randnahen Bereich durch das erfindungsgemäße Erwärmen stabilisiert wird. Der damit verbundene leichte Druckeigenspannungsabbau in der Randschicht ist für den Betrieb im Wälzkontakt nicht relevant.

## Patentansprüche

1. Verfahren zum Herstellen eines metallischen Bauteils,
**dadurch gekennzeichnet,**
**dass** es die Abfolge folgender Schritte aufweist:
a) Durchführung einer Wärmebehandlung zur Härtung des Bauteils, die mit einem Erwärmungsvorgang, insbesondere mit einem Anlass- oder Gefügeumwandlungsvorgang, bei vorgegebener Temperatur (T_{E}) endet;
b) Durchführung mindestens einer spanenden Bearbeitung des Bauteils bei Raumtemperatur (T_{U}), um es auf seine gewünschte geometrische Form zu bringen;
c) anschließendes Erwärmen des Bauteils auf eine Temperatur (T), die größer ist als die Raumtemperatur (T_{U}), wobei dieses Erwärmen den Abschluss der Herstellung des Bauteils darstellt.

2. Verfahren nach Anspruch 1, **dadurch gekennzeichnet, dass** das Bauteil bei der Durchführung des Schritts c) gemäß Anspruch 1 in einem Ofen oder mittels Infrarot-Strahlung, jeweils unter Luft- oder Schutzgasatmosphäre, erwärmt oder in einem Salzbad gehalten wird.

3. Verfahren nach Anspruch 1 oder 2, **dadurch gekennzeichnet, dass** das Bauteil bei der Durchführung des Schritts c) gemäß Anspruch 1 an Luft oder in einer Schutzgasatmosphäre induktiv erwärmt wird.

4. Verfahren nach einem der Ansprüche 1 bis 3, **dadurch gekennzeichnet, dass** die Temperatur (T) bei der Durchführung des Schritts c) gemäß Anspruch 1 zwischen 50 °C und 400 °C liegt.

5. Verfahren nach einem der Ansprüche 1 bis 4, **dadurch gekennzeichnet, dass** die Wärmebehandlung nach Schritt a) gemäß Anspruch 1 eine martensitische Durchhärtung, eine Einsatzhärtung oder eine Induktionshärtung eines Stahls mit abschließendem Kurzzeit- oder konventionellen Anlassvorgang ist.

6. Verfahren nach einem der Ansprüche 1 bis 4, **dadurch gekennzeichnet, dass** die Wärmebehandlung nach Schritt a) gemäß Anspruch 1 eine bainitische Härtung eines Stahls ist.

7. Verfahren nach einem der Ansprüche 1 bis 4, **dadurch gekennzeichnet, dass** die Wärmebehandlung nach Schritt a) gemäß Anspruch 1 eine Härtung des Stahls in ein bainitisch-martensitisches bzw. martensitisch-bainitisches Mischgefüge ist.

8. Verfahren nach Anspruch 5 bis 7, **dadurch gekennzeichnet, dass** die Temperatur (T) des Erwärmungsvorgangs nach Schritt c) gemäß Anspruch 1 zwischen 100 °C und 350 °C liegt.

9. Verfahren nach einem der Ansprüche 1 bis 8, **dadurch gekennzeichnet, dass** das Bauteil bei der Durchführung des Schritts c) gemäß Anspruch 1 für eine Zeit von mindestens 2 Sekunden, vorzugsweise von mindestens 1 Minute, auf der Temperatur (T) gehalten wird.

10. Verfahren nach einem der Ansprüche 1 bis 9, **dadurch gekennzeichnet, dass** der Werkstoff des Bauteils eine metallische Legierung mit interstitiell gelösten Atomen, insbesondere ein kohlenstoff- und/oder stickstofflegierter Stahl, ist.

11. Verfahren nach einem der Ansprüche 1 bis 10, **dadurch gekennzeichnet, dass** der Werkstoff des Bauteils ein für Komponenten eines Wälz- oder Gleitlagers geeigneter Stahl, insbesondere Wälzlagerstahl oder Einsatzstahl, ist.

## Claims

1. Method for producing a metallic component,
**characterized**
**in that** it comprises the sequence of the following steps:
a) carrying out a heat treatment to harden the component, said heat treatment ending with a heating process, in particular with a tempering or microstructural transformation process, at a predefined temperature (T_{E});
b) carrying out at least one process for machining the component at room temperature (T_{U}), in order to bring it to its desired geometrical shape;
c) subsequently heating the component to a temperature (T) greater than room temperature (T_{U}), this heating process representing the conclusion of the component production.

2. Method according to Claim 1, **characterized in that**, as step c) as per Claim 1 is being carried out, the component is heated in a furnace or by means of infrared radiation, in each case in an air or protective gas atmosphere, or is kept in a salt bath.

3. Method according to Claim 1 or 2, **characterized in that**, as step c) as per Claim 1 is being carried out, the component is inductively heated in air or in a protective gas atmosphere.

4. Method according to one of Claims 1 to 3, **characterized in that**, as step c) as per Claim 1 is being carried out, the temperature (T) is between 50°C and 400°C.

5. Method according to one of Claims 1 to 4, **characterized in that** the heat treatment according to step a) as per Claim 1 comprises martensitic penetration hardening, case hardening or induction hardening of a steel, with a final short-term or conventional tempering process.

6. Method according to one of Claims 1 to 4, **characterized in that** the heat treatment according to step a) as per Claim 1 comprises bainitic hardening of a steel.

7. Method according to one of Claims 1 to 4, **characterized in that** the heat treatment according to step a) as per Claim 1 comprises hardening of the steel into a bainitic-martensitic or martensitic-bainitic mixed microstructure.

8. Method according to Claims 5 to 7, **characterized in that** the temperature (T) of the heating process according to step c) as per Claim 1 is between 100°C and 350°C.

9. Method according to one of Claims 1 to 8, **characterized in that**, as step c) as per Claim 1 is being carried out, the component is kept at the temperature (T) for a period of time of at least 2 seconds, preferably of at least 1 minute.

10. Method according to one of Claims 1 to 9, **characterized in that** the material of the component is a metallic alloy with interstitially dissolved atoms, in particular a carbon-alloyed and/or nitrogen-alloyed steel.

11. Method according to one of Claims 1 to 10, **characterized in that** the material of the component is a steel suitable for components of a rolling bearing or plain bearing, in particular rolling bearing steel or case-hardened steel.

## Revendications

1. Procédé pour la fabrication d'un composant en métal, **caractérisé en ce qu'**il comprend la séquence d'étapes suivantes:
a) exécution d'un traitement thermique pour le durcissement du composant, qui se termine par une opération de chauffage, en particulier par une opération de revenu ou de transformation de structure, à une température prédéterminée (T_{E});
b) exécution d'au moins un usinage par enlèvement de copeaux du composant à la température ambiante (T_{U}), afin de l'amener à sa forme géométrique désirée;
c) chauffage ultérieur du composant à une température (T), qui est supérieure à la température ambiante (T_{U}), ce chauffage constituant la fin de la fabrication du composant.

2. Procédé selon la revendication 1, **caractérisé en ce que**, pendant l'exécution de l'étape c) selon la revendication 1, on chauffe le composant dans un four ou au moyen d'un rayonnement infrarouge, chaque fois sous une atmosphère d'air ou de gaz protecteur, ou on le maintient dans un bain de sels.

3. Procédé selon la revendication 1 ou 2, **caractérisé en ce que**, pendant l'exécution de l'étape c) selon la revendication 1, on chauffe le composant par induction dans l'air ou dans une atmosphère de gaz protecteur.

4. Procédé selon l'une quelconque des revendications 1 à 3, **caractérisé en ce que** la température (T) pendant l'exécution de l'étape c) selon la revendication 1 se situe entre 50°C et 400°C.

5. Procédé selon l'une quelconque des revendications 1 à 4, **caractérisé en ce que** le traitement thermique de l'étape a) selon la revendication 1 est une trempe martensitique à coeur, une cémentation ou une trempe par induction d'un acier avec une opération finale de revenu de courte durée ou conventionnelle.

6. Procédé selon l'une quelconque des revendications 1 à 4, **caractérisé en ce que** le traitement thermique de l'étape a) selon la revendication 1 est une trempe bainitique d'un acier.

7. Procédé selon l'une quelconque des revendications 1 à 4, **caractérisé en ce que** le traitement thermique de l'étape a) selon la revendication 1 est une trempe de l'acier en une structure mixte bainitique-martensitique ou martensitique-bainitique.

8. Procédé selon les revendications 5 à 7, **caractérisé en ce que** la température (T) de l'opération de chauffage de l'étape c) selon la revendication 1 se situe entre 100°C et 350°C.

9. Procédé selon l'une quelconque des revendications 1 à 8, **caractérisé en ce que**, pendant l'exécution de l'étape c) selon la revendication 1, on maintient le composant à la température (T) pendant une durée d'au moins 2 secondes, de préférence d'au moins 1 minute.

10. Procédé selon l'une quelconque des revendications 1 à 9, **caractérisé en ce que** le matériau du composant est un alliage métallique avec des atomes en solution interstitielle, en particulier un acier allié avec du carbone et/ou de l'azote.

11. Procédé selon l'une quelconque des revendications 1 à 10, **caractérisé en ce que** le matériau du composant est un acier convenant pour des composants d'un palier de roulement ou d'un palier lisse, en particulier un acier pour roulements ou un acier de cémentation.
